# EUROPEAN PATENT APPLICATION

(11) **EP 4 040 844 A1**
(43) Date of publication of application: **10.08.2022**
(21) Application number: 20871454.3
(22) Date of filing: 22.06.2020
(51) Int. Cl.: H04W 28/12

(54) **CONTROL METHOD FOR SERVICE TRANSMISSION, TERMINAL AND NETWORK DEVICE**

(30) Priority: 30.09.2019 CN 201910941809
(71) Applicant: Datang Mobile Communications Equipment Co., Ltd., Beijing 100085 (CN)
(72) Inventor: LIN, Xiangli, Beijing 100083 (CN); WANG, Lei, Beijing 100083 (CN)
(74) Representative: dompatent von Kreisler Selting Werner - Partnerschaft von Patent- und Rechtsanwälten mbB
(86) International application number: PCT/CN2020/097429
(87) International publication number: WO 2021/063034

(57) **Abstract**

A method of controlling service transmission, a terminal and a network device are provided, the method is performed by a first terminal, including: obtaining an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission; when there exists a resource conflict between the service transmission of the first terminal and the high-priority service transmission, stopping a service transmission on a target resource position where the resource conflict occurs according to the first indication information.

## Description

### CROSS-REFERENCE TO RELATED APPLICATIONS

This application claims priority to Chinese Patent Application No.201910941809.7 filed on September 30, 2019 in China, the entire contents of which are incorporated herein by reference.

### TECHNICAL FIELD

The present disclosure relates to the technical field of communications technology, in particular to a method of controlling service transmission, a terminal and a network device.

### BACKGROUND

In the fifth-generation (5G) mobile communication system, there are data services with different priorities, time delay requirements or transmission time intervals. Ultra-Reliable and Low Latency Communications services may occur sporadically and irregularly, so it may occur that two data transmissions with different priorities collide on the same resources, as a result, low-priority services interfere with high-priority services.

### SUMMARY

The present disclosure provides a method of controlling service transmission, a terminal and a network device, so as to solve the issue that low-priority services interfere with high-priority services when two data transmissions with different priorities collide.

A method of controlling service transmission is provided in the present disclosure, performed by a first terminal, including:
obtaining an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission;
when there exists a resource conflict between the service transmission of the first terminal and the high-priority service transmission, stopping a service transmission on a target resource position where the resource conflict occurs according to the first indication information.

Optionally, prior to the stopping the transmission of the service on the target resource where the resource conflict occurs according to the first indication, the method further includes:
obtaining a resource position occupied by the service transmission in the reference resource domain;
determining a resource position having a resource conflict with the high-priority service transmission as the target resource position according to the first indication information.

Optionally, the first indication information includes at least one of following:
indication information of time domain position occupied by the high-priority service transmission in the reference resource domain;
indication information of frequency domain position occupied by the high-priority service transmission in the reference resource domain.

Optionally, the reference resource domain includes a set of physical resource blocks (PRBs) in the frequency domain and a set of Orthogonal Frequency Division Multiplexing (OFDM) symbols in the time domain.

Optionally, the second indication information includes:
indication information indicating whether a transmission service of the first terminal corresponding to each bit in a sequence of bits of length N has a resource conflict with the higher-priority service transmission;
the N represents a quantity of the first terminal which receives the indication signaling.

A method of controlling service transmission is provided in the present disclosure, performed by a network device, including:
sending an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission.

Optionally, the first indication information includes at least one of following:
indication information of time domain position occupied by the high-priority service transmission in the reference resource domain;
indication information of frequency domain position occupied by the high-priority service transmission in the reference resource domain.

Optionally, the reference resource domain includes a set of physical resource blocks (PRBs) in the frequency domain and a set of Orthogonal Frequency Division Multiplexing (OFDM) symbols in the time domain.

Optionally, the second indication information includes:
indication information indicating whether a transmission service of the first terminal corresponding to each bit in a sequence of bits of length N has a resource conflict with the higher-priority service transmission;
the N represents a quantity of the first terminal which receives the indication signaling.

A terminal is provided in the present disclosure, where the terminal is a first terminal and includes a transceiver, a storage, a processor and a computer program stored on the storage and executable by the processor, wherein the computer program is executable by the processor to perform:
obtaining an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission;
when there exists a resource conflict between the service transmission of the first terminal and the high-priority service transmission, stopping a service transmission on a target resource position where the resource conflict occurs according to the first indication information.

Optionally, the computer program is executable by the processor to perform:
obtaining a resource position occupied by the service transmission in the reference resource domain;
determining a resource position having a resource conflict with the high-priority service transmission as the target resource position according to the first indication information.

Optionally, the first indication information includes at least one of following:
indication information of time domain position occupied by the high-priority service transmission in the reference resource domain;
indication information of frequency domain position occupied by the high-priority service transmission in the reference resource domain.

Optionally, the reference resource domain includes a set of physical resource blocks (PRBs) in the frequency domain and a set of Orthogonal Frequency Division Multiplexing (OFDM) symbols in the time domain.

Optionally, the second indication information includes:
indication information indicating whether a transmission service of the first terminal corresponding to each bit in a sequence of bits of length N has a resource conflict with the higher-priority service transmission;
the N represents a quantity of the first terminal which receives the indication signaling.

A network device is provided in the present disclosure, including a transceiver, a storage, a processor and a computer program stored on the storage and executable by the processor, where the computer program is executable by the processor to perform:
sending an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission.

Optionally, the first indication information includes at least one of following:
indication information of time domain position occupied by the high-priority service transmission in the reference resource domain;
indication information of frequency domain position occupied by the high-priority service transmission in the reference resource domain.

Optionally, the reference resource domain includes a set of physical resource blocks (PRBs) in the frequency domain and a set of Orthogonal Frequency Division Multiplexing (OFDM) symbols in the time domain.

Optionally, the second indication information includes:
indication information indicating whether a transmission service of the first terminal corresponding to each bit in a sequence of bits of length N has a resource conflict with the higher-priority service transmission;
the N represents a quantity of the first terminal which receives the indication signaling.

A terminal is provided in the present disclosure, the terminal is a first terminal, including:
a first obtaining module, configured to obtain an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission;
a controlling module, configured to, when there exists a resource conflict between the service transmission of the first terminal and the high-priority service transmission, stop a service transmission on a target resource position where the resource conflict occurs according to the first indication information.

A network device is provided in the present disclosure, including:
a transceiver module, configured to send an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission.

A computer-readable storage medium is provided in the present disclosure, storing a computer program, where the computer program is configured to be executed by a processor to perform the steps in the method of controlling service transmission hereinabove.

The above solution of the present disclosure provides a beneficial effect: a first terminal obtains first indication information of a resource position occupied by a high-priority service transmission of a second terminal in a reference resource domain and second indication information indicating whether there exists a resource conflict between the service transmission of the first terminal and the high-priority service transmission, and the first terminal controls a stopping of service transmission at a target resource position where the resource conflict occurs according to the first indication information when there exists a resource conflict between the service transmission of the first terminal and the high-priority service transmission, so as to avoid an interference of low-priority service transmission on high-priority service transmission.

### BRIEF DESCRIPTION OF THE DRAWINGS

FIG.1 is a first flowchart of a method of controlling service transmission in some embodiments of the present disclosure;
FIG.2 is a first schematic diagram of reference resource domain in some embodiments of the present disclosure;
FIG.3 is a second schematic diagram of reference resource domain in some embodiments of the present disclosure;
FIG.4 is a third schematic diagram of reference resource domain in some embodiments of the present disclosure;
FIG.5 is a second flowchart of a method of controlling service transmission in some embodiments of the present disclosure;
FIG.6 is a schematic diagram of modules of a terminal in some embodiments of the present disclosure;
FIG.7 is a schematic diagram of modules of a network device in some embodiments of the present disclosure;
FIG.8 is a structural schematic diagram of implementation of a terminal in some embodiments of the present disclosure;
FIG.9 is a structural schematic diagram of implementation of a network device in some embodiments of the present disclosure.

### DETAILED DESCRIPTION

To make the technical problems, technical solutions, and advantages of this disclosure clearer, detailed description is described hereinafter with reference to the accompanying drawings and embodiments. Specific details such as specific configurations and components are provided in the following descriptions only to help fully understand the embodiments of this disclosure. Therefore, it should be clear to those skilled in the field that various changes and modifications to the embodiments described herein may be made fall in the scope and spirit of this disclosure. In addition, descriptions of known functions and constructs have been omitted for clarity and brevity.

It should be understood that references throughout the specification to "an embodiment" mean that particular features, structures or characteristics relating to an embodiment are included in at least one embodiment disclosed herein. Thus, the words "in one embodiment" appearing throughout the specification do not necessarily mean the same embodiment. In addition, these particular features, structures, or characteristics may be combined in one or more embodiments in any suitable manner.

In various embodiments of the present disclosure, it should be understood that size of serial number of following procedures does not mean order of execution, which shall be determined by its function and internal logic and shall not constitute any limitation on the implementation of the embodiments of the present disclosure.

In addition, terms "system" and "network" can interchange in the context.

In embodiments provided in the present application, it should be understood that "B corresponding to A" means that B is associated with A, determining B according to A. It should also be understood that, determining B according to A does not mean determining B only according to A, but can also determine B according to A and/or other information.

In embodiments of the present disclosure, forms of access network are unlimited which can include Macro Base Station, Pico Base Station, Node B (3G mobile Base Station), Evolved Node B (eNB), Home Evolved Node B (HeNB) or Femto Evolved Node B, relay station, access point, Remote Radio Unit (RRU), Radio Remote Head (RRH), etc. User terminal can be a mobile phone (or cell phone), or any other device capable of sending or receiving wireless signals,Including user Equipment, personal digital assistants (PDAs), wireless modems, wireless communication devices, handheld devices, laptop computers, cordless phones, wireless local loop (WLL) stations, Customer Premise Equipment (CPE) which can convert mobile signals to WiFi signals or mobile smart hot spots, smart home appliances, or other devices that can spontaneously communicate with mobile communication networks without human operation.

In 5G system, Ultra-Reliable and Low Latency Communications (URLLC) services may occur sporadically and irregularly, so enabling this service to multiplex over the same resources that transmit other services with different requirements helps reduce transmission latency. When a base station schedules service transmission of different priorities from different terminals, two data transmission of different priorities may conflict on the same resource. For example, when the base station receives the URLLC service request from another terminal after the base station schedules Enhanced Mobile Broadband (eMBB) service, the resources of the URLLC service conflict with the eMBB service that has been scheduled. To ensure requirements of ultra reliability and low latency for high-priority URLLC service, avoiding interference of eMBB service, a base station would inform eMBB service to stop transmission, define reference resource, divide the reference resource into multiple resource blocks, indicate which resource block conflicts and inform indication information to a terminal.

In related art, operation of downlink transmission cancellation is carried out by a base station for different terminals with different priorities, but it may mistakenly cancel transmission of low-priority service that do not conflict with high-priority service; but in uplink transmission, when service of different priorities of different terminals conflict, base station need to send signaling to terminal to perform the transmission to cancel the operation. Different from downlink, in order to ensure the normal high-priority service transmission, reliability requirement for indication signaling of canceling low-priority transmission is higher; on the other hand, if the granularity of resource is the same as that of downlink resource, the indicating precision will decrease. Therefore, the uplink may use smaller granularity to divide more resource blocks for indicating, which increases signaling overhead and affects the reliability of indication signaling. Therefore, embodiments of the present disclosure provides a controlling method, terminal and network device for service transmission, avoiding a interference of low-priority service transmission on high-priority service transmission, so as to ensure high-priority service transmission.

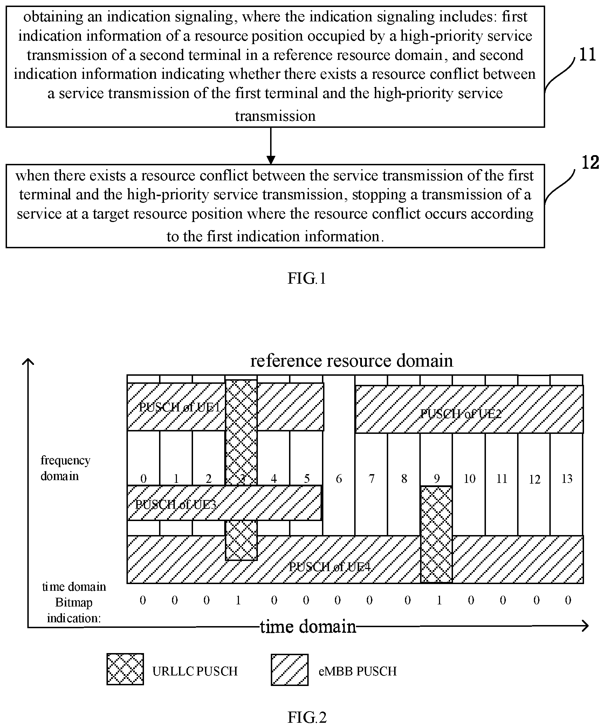

Specifically, as shown in FIG.1, embodiments of the present disclosure provides a method of controlling service transmission, performed by a first terminal, including:

Step 11: obtaining an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission.

Specifically, the first terminal can be configured by a network device to detect and receive the indication signaling for indicating the first terminal sent by the network device.

Step 12: when there exists a resource conflict between the service transmission of the first terminal and the high-priority service transmission, stopping a transmission of a service at a target resource position where the resource conflict occurs according to the first indication information.

Specifically, when there exists a resource conflict between the service transmission of the first terminal and the high-priority service transmission, the first terminal controls a stopping of service transmission at a target resource position where the resource conflict occurs according to the first indication information, so as to avoid an interference of low-priority service transmission on high-priority service transmission.

In above embodiments of the present disclosure, a first terminal obtains first indication information of a resource position occupied by a high-priority service transmission of a second terminal in a reference resource domain and second indication information indicating whether there exists a resource conflict between the service transmission of the first terminal and the high-priority service transmission, and the first terminal controls a stopping of service transmission at a target resource position where the resource conflict occurs according to the first indication information when there exists a resource conflict between the service transmission of the first terminal and the high-priority service transmission, so as to avoid the interference of low-priority service transmission on high-priority service transmission.

Moreover, before the step 12, the method further includes:
obtaining a resource position occupied by the service transmission in the reference resource domain;
determining a resource position having a resource conflict with the high-priority service transmission as the target resource position according to the first indication information.

Specifically, obtaining the resource position occupied by the service transmission of the first terminal in the reference resource domain, the first terminal determines a resource position having a resource conflict with the high-priority service transmission as the target resource position according to the first indication information.

Moreover, the first indication information includes at least one of following:
indication information of time domain position occupied by the high-priority service transmission in the reference resource domain;
indication information of frequency domain position occupied by the high-priority service transmission in the reference resource domain.

Specifically, the first indication information can includes indication information of time domain position occupied by the high-priority service transmission in the reference resource domain, or indication information of frequency domain position occupied by the high-priority service transmission in the reference resource domain, or indication information of time and frequency domain position occupied by the high-priority service transmission in the reference resource domain.

Moreover, the reference resource domain includes a set of physical resource blocks (PRBs) in the frequency domain and a set of Orthogonal Frequency Division Multiplexing (OFDM) symbols in the time domain.

Specifically, the reference resource domain is a set of physical resource blocks (PRBS) in the frequency domain or a set of Orthogonal Frequency Division Multiplexing (OFDM) symbols in the time domain, the resource set is predetermined or informed by the network device through signaling.

Moreover, the second indication information including:
indication information indicating whether a transmission service of the first terminal corresponding to each bit in a sequence of bits of length N has a resource conflict with the higher-priority service transmission;
where the N represents a quantity of the first terminal which receives the indication signaling.

Specifically, in the case of there are multiple first terminals, the indication information includes a sequence of bits of length N, each bit corresponding to a first terminal is configured to indicate whether service transmission corresponding to the first terminal is affected by the higher-priority service transmission, for example, bit 0 indicates that the corresponding first terminal is not affected by high-priority service transmission, bit 1 indicates that the corresponding first terminal is affected by high-priority service transmission; and N represents a quantity of the first terminals which is configured by the network device to receive the indication signaling jointly. Each bit corresponds to a first terminal, the corresponding relationship can be predetermined or configured by the network device through high-level signaling.

The above methods are described in detail through specific embodiments as follows:

### Embodiment 1:

As shown in FIG.2, assuming there are four first terminal configured by a network device, including user equipment (UE) 1, UE 2, UE 3 and UE 4, UE1, UE2, UE3 and UE4 are a group of first terminals to detect and receive an indication signaling. Reference resource domain acted by the indication signaling is shown in FIG.2, the reference resource domain is configured to be divided into 14 parts in time domain and be indicated through bitmap.

Assuming that positions separately occupied by low-priority service transmission eMBB Physical Uplink Shared Channel (PUSCH) of the four first terminals in the reference resource domain are shown in FIG.2, and in the reference resource domain, there are high-priority service transmission URLLC PUSCH of 2 second terminals, and the resources occupied by them are shown in FIG.2. Then the indication signaling contains first indication information of resource position occupied by other high-priority services in the reference resource domain, which is "00 0100 0001 0000", indicating that the high-priority service of the second terminal occupies positions of partition blocks numbered 3 and 9 in the time domain of the reference resource domain. Meanwhile, the indication signaling includes a sequence of bits of length 4, 4 bits information is predetermined or configured by base station though high-level signaling to correspond to UE1, UE2, UE3 and UE4 respectively, used to indicate whether the four first terminal is affected by high-priority service. As shown in FIG.2, if the PUSCH of the first terminal UE1, UE3, UE4 conflict with URLLC PUSCH resource and UE2 does not, then the corresponding bit information is represented as "1011".

After the first terminal UE1, UE2, UE3 and UE4 detect the indication signaling, determining partition blocks, affected by high-priority service, numbered 3 and 9 in the time domain of the reference resource domain. Meanwhile, the first terminal UE1, UE3 and UE4 determine the service transmission of themselves is affected by the high-priority service of the second terminal according to 4-bit sequence information "1011", and cancel the service transmission; and the first terminal UE2 determine the service transmission of themselves is not affected, and transmit eMBB PUSCH as usual.

### Embodiment 2:

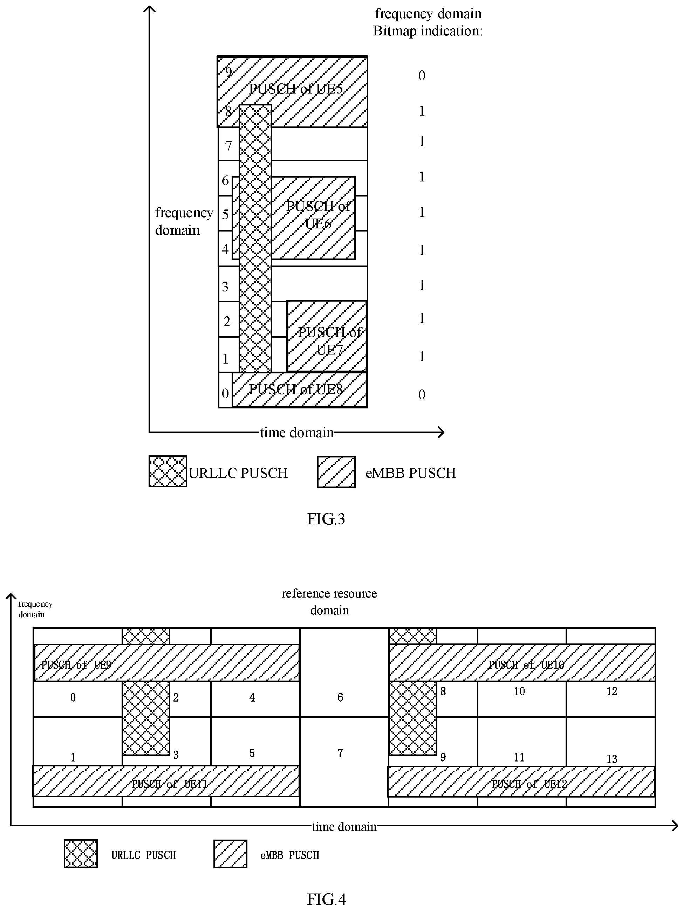

As shown in FIG.3, assuming there are four first terminal configured by a network device, including UE5, UE6, UE7 and UE8, UE5, UE6, UE7 and UE8are a group of first terminals to detect and receive an indication signaling. Reference resource domain acted by the indication signaling is shown in FIG.3, the reference resource domain is configured to be divided into 10 parts in frequency domain and be indicated through bitmap.

Assuming that positions separately occupied by low-priority service transmission eMBB PUSCH of the four first terminals in the reference resource domain are shown in FIG.3, and in the reference resource domain, there are high-priority service transmission URLLC PUSCH of 1 second terminal, and the resources occupied by them are shown in FIG.3. Then the indication signaling contains first indication information of resource position occupied by other high-priority services in the reference resource domain, which is "01 1111 1110", indicating that the high-priority service of the second terminal occupies positions of the partition blocks numbered 1 to 8 in the reference resource domain. Meanwhile, the indication signaling includes a sequence of bits of length 4, 4 bits information is predetermined or configured by base station though high-level signaling to correspond to UE1, UE5, UE6, UE7 and UE8 respectively, used to indicate whether the four first terminal is affected by high-priority service. As shown in FIG.3, if the PUSCH of UE5, UE6 conflict with URLLC PUSCH resource, and UE7, UE8 does not, then the corresponding bit information is represented as "1100".

After the first terminal UE5, UE6, UE7 and UE8 detect the indication signaling, determining partition blocks, affected by high-priority service, numbered 1 to 8 in the time domain of the reference resource domain. Meanwhile, the first terminal UE5, UE6 determine the service transmission of themselves is affected by the high-priority service of the second terminal according to 4-bit sequence information "1100", and cancel the service transmission; and the first terminal UE7, UE8 determine the service transmission of themselves is not affected, and transmit eMBB PUSCH as usual.

### Embodiment 3:

As shown in FIG.4, assuming there are four first terminal configured by a network device, including UE 9, UE 10, UE 11 and UE 12, UE9, UE10, UE11 and UE12 are a group of first terminals to detect and receive an indication signaling. Reference resource domain acted by the indication signaling is shown in FIG.4, the reference resource domain is configured to be divided into 7 parts in time domain and be indicated through bitmap.

Assuming that positions separately occupied by low-priority service transmission eMBB PUSCH of the four first terminals in the reference resource domain are shown in FIG.4, and in the reference resource domain, there are high-priority service transmission URLLC PUSCH of 2 second terminal, and the resources occupied by them are shown in FIG.4. Then the indication signaling contains first indication information of resource position occupied by other high-priority services in the reference resource domain, which is "00 1100 0011 0000", indicating that the high-priority service of the second terminal occupies positions of the partition blocks numbered 2, 3, ,8, 9 in the reference resource domain. Meanwhile, the indication signaling includes a sequence of bits of length 4, 4 bits information is predetermined or configured by base station though high-level signaling to correspond to UE9, UE10, UE11 and UE12 respectively, used to indicate whether the four first terminal is affected by high-priority service. As shown in FIG.4, if the PUSCH of UE9, UE10 conflict with URLLC PUSCH resource, and UE11, UE12 does not, then the corresponding bit information is represented as "1100".

The first terminal UE9, UE10 determine the service transmission of themselves is affected by the high-priority service of the second terminal according to 4-bit sequence information "1100", and cancel the service transmission; and the first terminal UE7, UE8 determine the service transmission of themselves is not affected, and transmit eMBB PUSCH as usual.

After the first terminal UE9, UE10, UE11 and UE12 detect the indication signaling, determining partition blocks, affected by high-priority service, numbered 2, 3, ,8, 9 in the time domain of the reference resource domain. Meanwhile, the first terminal UE9, UE10 determine the service transmission of themselves is affected by the high-priority service of the second terminal according to 4-bit sequence information "1100", and cancel the service transmission; and the first terminal UE11, UE12 determine the service transmission of themselves is not affected, and transmit eMBB PUSCH as usual.

In above embodiments of the present disclosure, the first terminals obtain a sequence of bits of length N of the indication signaling and determine corresponding position of service transmission of the first terminal in the sequence of bits and obtain corresponding indication information to determine whether the service transmission of themselves is affected by the high-priority service of the second terminal. If the first terminals determine service transmission of themselves is affected by the high-priority service of the second terminal, determining resource position (that is target resource position) that needs to be canceled for service transmission of the first terminals, and stop the service transmission at the resource position, so as to avoid interference of low-priority service transmission on high-priority service transmission. Also, increased signaling overhead caused by dividing the reference resource domain into smaller granularity can be avoided. By indicating which first terminal is affected by the high-priority service transmission, the indicating signaling accuracy is increased to some extent, avoiding wrong operation of canceling the low-priority service transmission, and at the same time not increasing extra signaling overhead.

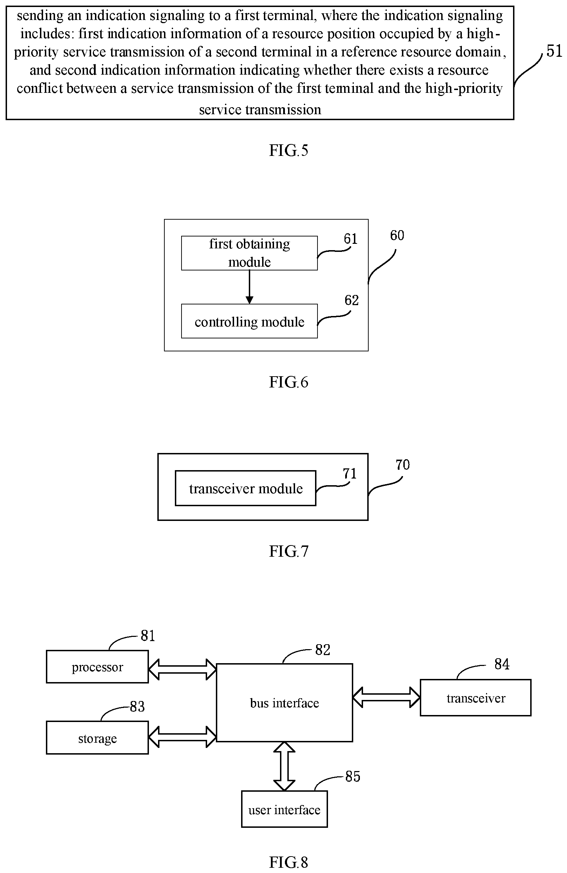

As shown in FIG.5, embodiments of the present disclosure also provides a method for controlling service transmission, performed by a network device, including:

Step 51: sending an indication signaling to a first terminal, where the indication signaling includes: first indication information of a resource position occupied by a high-priority service transmission of a second terminal in a reference resource domain, and second indication information indicating whether there exists a resource conflict between a service transmission of the first terminal and the high-priority service transmission.

In above embodiments of the present disclosure, sending a first indication of a resource position occupied by a high-priority service transmission of a second terminal in a reference resource domain and a second indication indicating whether there exists a resource conflict between the service transmission of the first terminal and the high-priority service transmission to a first terminal can make the first terminal control a stopping of service transmission at a target resource position where the resource conflict occurs according to the first indication information when there exists a resource conflict between the service transmission of the first terminal and the high-priority service transmission, so as to avoid the interference of low-priority service transmission on high-priority service transmission.

Moreover, the first indication information includes at least one of following:
indication information of time domain position occupied by the high-priority service transmission in the reference resource domain;
indication information of frequency domain position occupied by the high-priority service transmission in the reference resource domain.

Specifically, the first indication information can includes indication information of time domain position occupied by the high-priority service transmission in the reference resource domain, or indication information of frequency domain position occupied by the high-priority service transmission in the reference resource domain, or indication information of time and frequency domain position occupied by the high-priority service transmission in the reference resource domain.

Moreover, the reference resource domain includes a set of physical resource blocks (PRBS) in the frequency domain and a set of Orthogonal Frequency Division Multiplexing (OFDM) signals in the time domain.

Specifically, the reference resource domain is a set of physical resource blocks (PRBs) in the frequency domain or a set of Orthogonal Frequency Division Multiplexing (OFDM) symbols in the time domain, the resource set is predetermined or informed by the network device through signaling.

Moreover, the second indication information including:
indication information indicating whether a transmission service of the first terminal corresponding to each bit in a sequence of bits of length N has a resource conflict with the higher-priority service transmission;
where the N represents a quantity of the first terminal which receives the indication signaling.

Specifically, in the case of there are multiple first terminals, the indication information includes a sequence of bits of length N, each bit corresponding to a first terminal is configured to indicate whether service transmission corresponding to the first terminal is affected by the higher-priority service transmission, for example, bit 0 indicates that the corresponding first terminal is not affected by high-priority service transmission, bit 1 indicates that the corresponding first terminal is affected by high-priority service transmission; and N represents a quantity of the first terminals which is configured by the network device to receive the indication signaling jointly. Each bit corresponds to a first terminal, the corresponding relationship can be predetermined or configured by the network device through high-level signaling.

As shown in FIG.6, embodiments of the present disclosure also provides a terminal 60, the terminal is a first terminal, including:
a first obtaining module 61, configured to obtain an indication signaling, the indication signaling includes: first indication information of a resource position occupied by a high-priority service transmission of a second terminal in a reference resource domain, and second indication information indicating whether there exists a resource conflict between a service transmission of the first terminal and the high-priority service transmission;
a controlling module 62, configured to control a stopping of service transmission at a target resource position where the resource conflict occurs according to the first indication information when there exists a resource conflict between the service transmission of the first terminal and the high-priority service transmission.

Moreover, the terminal 60 further includes:
a second obtaining module, configured to obtain a resource position occupied by the service transmission in the reference resource domain;
a determining module, configured to determine a resource position having a resource conflict with the high-priority service transmission as the target resource position according to the first indication information.

Moreover, the first indication information includes at least one of following:
indication information of time domain position occupied by the high-priority service transmission in the reference resource domain;
indication information of frequency domain position occupied by the high-priority service transmission in the reference resource domain.

Moreover, the reference resource domain includes a set of physical resource blocks (PRBs) in the frequency domain and a set of Orthogonal Frequency Division Multiplexing (OFDM) symbols in the time domain.

Moreover, the second indication information including:
indication information indicating whether a transmission service of the first terminal corresponding to each bit in a sequence of bits of length N has a resource conflict with the higher-priority service transmission;
where the N represents a quantity of the first terminal which receives the indication signaling.

The terminal of the present embodiment is corresponding to above embodiment of the control method for service transmission performed by the first terminal. All the implementation means in the above embodiment are applicable to the embodiment of the terminal and can achieve the same technical effect, which will not be described here.

As shown in FIG.7, embodiments of the present disclosure also provides a network device 70, including:
A transceiver module, configured to send an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission.

Moreover, the first indication information includes at least one of following:
indication information of time domain position occupied by the high-priority service transmission in the reference resource domain;
indication information of frequency domain position occupied by the high-priority service transmission in the reference resource domain.

Moreover, the reference resource domain includes a set of physical resource blocks (PRBs) in the frequency domain and a set of Orthogonal Frequency Division Multiplexing (OFDM) symbols in the time domain.

Moreover, the second indication information including:
indication information indicating whether transmission service of the first terminal corresponding to each bit in a sequence of bits of length N has a resource conflict with the higher-priority service transmission;
where the N represents a quantity of the first terminal which receives the indication signaling.

The network device of the present embodiment is corresponding to above embodiment of the control method for service transmission. All the implementation means in the above embodiment are applicable to the embodiment of the network device and can achieve the same technical effect.

As shown in FIG.8, embodiments of the present disclosure also provides a terminal, the terminal is a first terminal, including:
a processor 81, a storage 83 connected with the processor 81 through a bus interface 82, the storage 83 is configured to store programs and data used by the processor 81 when implementing operations. When the processor 81 calls and executes the programs and data stored in the storage 83, the following procedure is implemented.
a transceiver 84 is connected with the bus interface 82, configured to transmit and receive data under a control of the processor 81, to be specific:
   obtaining an indication signaling, where the indication signaling includes: first indication information of a resource position occupied by a high-priority service transmission of a second terminal in a reference resource domain, and second indication information indicating whether there exists a resource conflict between a service transmission of the first terminal and the high-priority service transmission;
   when there exists a resource conflict between the service transmission of the first terminal and the high-priority service transmission, stopping a transmission of a service at a target resource position where the resource conflict occurs according to the first indication information.

Optionally, the computer program, when executable by the processor 81, implements the steps of following:
obtaining a resource position occupied by the service transmission in the reference resource domain;
determining a resource position having a resource conflict with the high-priority service transmission as the target resource position according to the first indication information.

Optionally, the first indication information includes at least one of following:
indication information of time domain position occupied by the high-priority service transmission in the reference resource domain;
indication information of frequency domain position occupied by the high-priority service transmission in the reference resource domain.

Optionally, the reference resource domain includes a set of physical resource blocks (PRBs) in the frequency domain and a set of Orthogonal Frequency Division Multiplexing (OFDM) symbols in the time domain.

Optionally, the second indication information includes:
indication information indicating whether a transmission service of the first terminal corresponding to each bit in a sequence of bits of length N has a resource conflict with the higher-priority service transmission;
where the N represents a quantity of the first terminal which receives the indication signaling.

The terminal of the present embodiment is corresponding to above embodiment of the control method for service transmission performed by the first terminal. All the implementation means in the above embodiment are applicable to the embodiment of the terminal and can achieve the same technical effect.

It should be noted that, in FIG.8, a bus architecture may include any number of interconnected buses and bridges. Specifically, various circuits such as one or more processors represented by the processor 81 and a memory represented by the storage 83 are linked together. The bus architecture can also link various other circuits such as peripherals, voltage regulators, power management circuits, etc., which are all known in the art, and therefore, will not be further described herein. The bus interface provides the interface. The transceiver 84 may be a plurality of elements, including a transmitter and a transceiver, and provide a unit for communicating with various other devices on a transmission medium. For different terminals, user interface 85 can also be used to connect devices inside and outside, including but not limited to keypads, monitors, speakers, microphones, and joysticks, etc. Processor 81 is responsible for managing the bus architecture and general processing, and storage 83 can store the data that processor 81 uses to perform operations.

Those skilled in this field can understand that all or part of the steps to achieve the above embodiments can be completed by hardware, or the relevant hardware can be instructed to complete by a computer program, and the computer program includes instructions to execute part or all of the steps of the above method; and the computer program can be stored in a readable storage medium, which can be any form of storage medium.

In above embodiments of the present disclosure, the first terminals obtain a sequence of bits of length N of the indication signaling and determine corresponding position of service transmission of the first terminal in the sequence of bits and obtain corresponding indication information to determine whether the service transmission of themselves is affected by the high-priority service of the second terminal. If the first terminals determine service transmission of themselves is affected by the high-priority service of the second terminal, determining resource position (that is target resource position) that needs to be canceled for service transmission of the first terminals, and stop the service transmission at the resource position, so as to avoid interference of low-priority service transmission on high-priority service transmission. Also, increased signaling overhead caused by dividing the reference resource domain into smaller granularity can be avoided. By indicating which first terminal is affected by the high-priority service transmission, the indicating signaling accuracy is increased to some extent, avoiding wrong operation of canceling the low-priority service transmission, and at the same time not increasing extra signaling overhead.

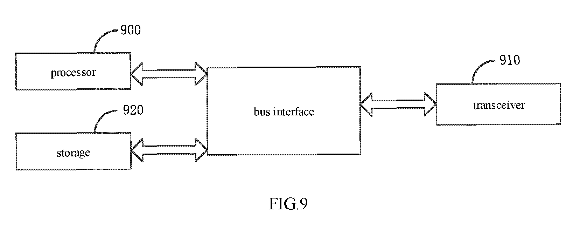

As shown in FIG.9, embodiments of the present disclosure also provide a network device, which can be specifically a base station, including: a processor 900, a storage 920 connected with the processor 900 through a bus interface, and a transceiver 910 connected with the processor 900 through the bus interface. The storage 920 is configured to store programs and data used by the processor in performing operations. The transceiver 910 is configured to send data information or pilot and receives the uplink control channel. When the processor 900 calls and executes the programs and data stored in the memory 920, the following functional modules are implemented:
the processor 900 is configured to read programs stored in storage 920, implementing following procedure:
sending an indication signaling to a first terminal, where the indication signaling includes:
first indication information of a resource position occupied by a high-priority service transmission of a second terminal in a reference resource domain, and second indication information indicating whether there exists a resource conflict between a service transmission of the first terminal and the high-priority service transmission.

A transceiver 910, configured to transmit and receive data under a control of the processor 900

Optionally, the first indication information includes at least one of following:
indication information of time domain position occupied by the high-priority service transmission in the reference resource domain;
indication information of frequency domain position occupied by the high-priority service transmission in the reference resource domain.

Optionally, the reference resource domain includes a set of physical resource blocks (PRBs) in the frequency domain and a set of Orthogonal Frequency Division Multiplexing (OFDM) symbols in the time domain.

Optionally, the second indication information including:
indication information indicating whether a transmission service of the first terminal corresponding to each bit in a sequence of bits of length N has a resource conflict with the higher-priority service transmission;
where the N represents a quantity of the first terminal which receives the indication signaling.

The network device of the present embodiment is corresponding to above embodiment of the control method for service transmission. All the implementation means in the above embodiment are applicable to the embodiment of the network device and can achieve the same technical effect.

It should be noted that, in FIG.9, a bus architecture may include any number of interconnected buses and bridges. Specifically, various circuits such as one or more processors represented by the processor 900 and a memory represented by the storage 920 are linked together. The bus architecture can also link various other circuits such as peripherals, voltage regulators, power management circuits, etc., which are all known in the art, and therefore, will not be further described herein. The bus interface provides the interface. The transceiver 910 may be a plurality of elements, including a transmitter and a transceiver, and provide a unit for communicating with various other devices on a transmission medium. Processor 900 is responsible for managing the bus architecture and general processing, and storage 920 can store the data that processor 900 uses to perform operations.

Embodiments of the present disclosure also provides a computer-readable storage medium, therein a computer program, the computer program is configured to be executed by a processor to implement the steps in the above method of controlling service transmission and can achieve the same technical effect, to avoid repetition, it will not described there. The storage medium include Read-Only Memory (ROM), Random Access Memory (RAM), magnetic disk or compact disc, etc.

Those skilled in this field can understand that all or part of the steps to achieve the above embodiments can be completed by hardware, or the relevant hardware can be instructed to complete by a computer program, and the computer program includes instructions to execute part or all of the steps of the above method; and the computer program can be stored in a readable storage medium, which can be any form of storage medium.

In above embodiments of the present disclosure, sending a first indication of a resource position occupied by a high-priority service transmission of a second terminal in a reference resource domain and a second indication indicating whether there exists a resource conflict between the service transmission of the first terminal and the high-priority service transmission to a first terminal can make the first terminal control a stopping of service transmission at a target resource position where the resource conflict occurs according to the first indication information when there exists a resource conflict between the service transmission of the first terminal and the high-priority service transmission, so as to avoid the interference of low-priority service transmission on high-priority service transmission.

In addition, it should be noted that in device and method of the present disclosure, it is obvious that the parts or steps can be decomposed and/or recombined. The decomposition and/or recombination shall be deemed to be equivalent to the present disclosure. Furthermore, the steps to implement the above series of processes can be executed in a natural chronological order, but not necessarily in chronological order, and some steps can be executed in parallel or independently of each other. For those skilled in this field, it should be understood that all or any of the steps or components of method and device of the present disclosure can be implemented by means of hardware, firmware, software or a combination of them in any computing device (including processors, storage media, etc.) or network of computing devices. This is what those skilled in this field can do with their basic programming skills after reading the published instructions.

Therefore, the purpose of the present disclosure can also be achieved by running a program or a group of programs on any computing device. The computing device can be may be a known universal device. Therefore, the purpose of the present disclosure can also be achieved by providing a program product that contains program code implementing the method or device only. That is, such program products also constitute the present disclosure, and storage medium in which such program products are stored also constitutes this disclosure. Obviously, the storage medium may be any known storage medium or any storage medium to be developed in the future. It should be noted that in device and method of the present disclosure, it is obvious that the parts or steps can be decomposed and/or recombined. The decomposition and/or recombination shall be deemed to be equivalent to the present disclosure. Furthermore, the steps to implement the above series of processes can be executed in a natural chronological order, but not necessarily in chronological order, and some steps can be executed in parallel or independently of each other. Some steps can be implemented in parallel or independently of each other.

The above are optional implementations of the present disclosure. It should be noted that for those skilled in the art can make various improvements and modifications to the present disclosure without departing from, and these improvements and modifications should also be considered within the scopes of the claims of the present disclosure.

## Claims

1. A method of controlling service transmission, performed by a first terminal, comprising:
obtaining an indication signaling, wherein the indication signaling comprises: first indication information of a resource position occupied by a high-priority service transmission of a second terminal in a reference resource domain, and second indication information indicating whether there exists a resource conflict between a service transmission of the first terminal and the high-priority service transmission;
when there exists a resource conflict between the service transmission of the first terminal and the high-priority service transmission, stopping a service transmission on a target resource position where the resource conflict occurs according to the first indication information.

2. The method of controlling service transmission according to claim 1, wherein prior to the stopping the transmission of the service on the target resource where the resource conflict occurs according to the first indication, the method further comprises:
obtaining a resource position occupied by the service transmission in the reference resource domain;
determining a resource position having a resource conflict with the high-priority service transmission as the target resource position according to the first indication information.

3. The method of controlling service transmission according to claim 1, wherein the first indication information comprises at least one of following:
indication information of time domain position occupied by the high-priority service transmission in the reference resource domain;
indication information of frequency domain position occupied by the high-priority service transmission in the reference resource domain.

4. The method of controlling service transmission according to claim 1, wherein the reference resource domain comprises a set of physical resource blocks (PRBs) in the frequency domain and a set of Orthogonal Frequency Division Multiplexing (OFDM) symbols in the time domain.

5. The method of controlling service transmission according to claim 1, wherein the second indication information comprises:
indication information indicating whether a transmission service of the first terminal corresponding to each bit in a sequence of bits of length N has a resource conflict with the higher-priority service transmission;
wherein the N represents a quantity of the first terminal which receives the indication signaling.

6. A method of controlling service transmission, performed by a network device, comprising:
sending an indication signaling, wherein the indication signaling comprises: first indication information of a resource position occupied by a high-priority service transmission of a second terminal in a reference resource domain, and second indication information indicating whether there exists a resource conflict between a service transmission of the first terminal and the high-priority service transmission.

7. The method of controlling service transmission according to claim 6, wherein the first indication information comprises at least one of following:
indication information of time domain position occupied by the high-priority service transmission in the reference resource domain;
indication information of frequency domain position occupied by the high-priority service transmission in the reference resource domain.

8. The method of controlling service transmission according to claim 6, wherein the reference resource domain comprises a set of physical resource blocks (PRBs) in the frequency domain and a set of Orthogonal Frequency Division Multiplexing (OFDM) symbols in the time domain.

9. The method of controlling service transmission according to claim 6, wherein the second indication information comprises:
indication information indicating whether a transmission service of the first terminal corresponding to each bit in a sequence of bits of length N has a resource conflict with the higher-priority service transmission;
wherein the N represents a quantity of the first terminal which receives the indication signaling.

10. A terminal, wherein the terminal is a first terminal and comprises a transceiver, a storage, a processor and a computer program stored on the storage and executable by the processor, wherein the computer program is executable by the processor to perform:
obtaining an indication signaling, wherein the indication signaling comprises: first indication information of a resource position occupied by a high-priority service transmission of a second terminal in a reference resource domain, and second indication information indicating whether there exists a resource conflict between a service transmission of the first terminal and the high-priority service transmission;
when there exists a resource conflict between the service transmission of the first terminal and the high-priority service transmission, stopping a service transmission on a target resource position where the resource conflict occurs according to the first indication information.

11. The terminal according to claim 10, wherein the computer program is executable by the processor to perform:
obtaining a resource position occupied by the service transmission in the reference resource domain;
determining a resource position having a resource conflict with the high-priority service transmission as the target resource position according to the first indication information.

12. The terminal according to claim 10, wherein the first indication information comprises at least one of following:
indication information of time domain position occupied by the high-priority service transmission in the reference resource domain;
indication information of frequency domain position occupied by the high-priority service transmission in the reference resource domain.

13. The terminal according to claim 10, wherein the reference resource domain comprises a set of physical resource blocks (PRBs) in the frequency domain and a set of Orthogonal Frequency Division Multiplexing (OFDM) symbols in the time domain.

14. The terminal according to claim 10, wherein the second indication information comprises:
indication information indicating whether a transmission service of the first terminal corresponding to each bit in a sequence of bits of length N has a resource conflict with the higher-priority service transmission;
wherein the N represents a quantity of the first terminal which receives the indication signaling.

15. A network device, comprising a transceiver, a storage, a processor and a computer program stored on the storage and executable by the processor, wherein the computer program is executable by the processor to perform:
sending an indication signaling, wherein the indication signaling comprises: first indication information of a resource position occupied by a high-priority service transmission of a second terminal in a reference resource domain, and second indication information indicating whether there exists a resource conflict between a service transmission of the first terminal and the high-priority service transmission.

16. The network device according to claim 15, wherein the first indication information comprises at least one of following:
indication information of time domain position occupied by the high-priority service transmission in the reference resource domain;
indication information of frequency domain position occupied by the high-priority service transmission in the reference resource domain.

17. The network device according to claim 15, wherein the reference resource domain comprises a set of physical resource blocks (PRBs) in the frequency domain and a set of Orthogonal Frequency Division Multiplexing (OFDM) symbols in the time domain.

18. The network device according to claim 15, wherein the second indication information comprises:
indication information indicating whether a transmission service of the first terminal corresponding to each bit in a sequence of bits of length N has a resource conflict with the higher-priority service transmission;
wherein the N represents a quantity of the first terminal which receives the indication signaling.

19. A terminal, the terminal is a first terminal, comprising:
a first obtaining module, configured to obtain an indication signaling, wherein the indication signaling comprises: first indication information of a resource position occupied by a high-priority service transmission of a second terminal in a reference resource domain, and second indication information indicating whether there exists a resource conflict between a service transmission of the first terminal and the high-priority service transmission;
a controlling module, configured to, when there exists a resource conflict between the service transmission of the first terminal and the high-priority service transmission, stop a service transmission on a target resource position where the resource conflict occurs according to the first indication information.

20. A network device, comprising:
a transceiver module, configured to send an indication signaling, wherein the indication signaling comprises: first indication information of a resource position occupied by a high-priority service transmission of a second terminal in a reference resource domain, and second indication information indicating whether there exists a resource conflict between a service transmission of the first terminal and the high-priority service transmission.

21. A computer-readable storage medium, storing a computer program, wherein the computer program is configured to be executed by a processor to perform the steps in the method of controlling service transmission according to any one of claims 1 to 9.
